# EUROPÄISCHE PATENTSCHRIFT

(11) **EP 3 321 216 B1**
(45) Veröffentlichungstag und Bekanntmachung des Hinweises auf die Patenterteilung: **02.12.2020**
(21) Anmeldenummer: 17197667.3
(22) Anmeldetag: 23.10.2017
(51) Int. Cl.: B65G 1/02, B65G 1/04

(54) **SHUTTLELAGER**
SHUTTLE BEARING
PALIER DE NAVETTE

(30) Priorität: 10.11.2016 DE 202016106276 U
(43) Veröffentlichungstag der Anmeldung: 16.05.2018
(73) Patentinhaber: BITO-Lagertechnik Bittmann GmbH, 55590 Meisenheim (DE)
(72) Erfinder: NEU, Sascha, 66885 Altenglan (DE); SPONHEIMER, Helmut, 55606 Kirn (DE)
(74) Vertreter: Richardt Patentanwälte PartG mbB

(56) Entgegenhaltungen:
- DE-A1- 4 010 598
- DE-A1-102014 114 496
- DE-B4-102010 029 563
- GB-A- 2 515 097
- US-A- 5 256 019

## Beschreibung

Die Erfindung betrifft ein Shuttlelager.

Aus dem Stand der Technik sind verschiedene Vorrichtungen bekannt, mittels welcher Stückgut, beispielsweise auf Palletten angeordnet, gelagert werden kann. So beschreibt beispielsweise die DE 38 40 648 A1 eine Ein-/Aus-Hochregallager-Einrichtung mit einer Mehrzahl von Regalkanälen in einer Ebene mit einer Mehrzahl von übereinander liegenden Ebenen von Kanälen mit zugeordneten Förderzeugen. Ein weiteres Kanallager als Spezialfall eines Shuttlelagers ist aus der DE 10 2010 029 563 B4 bekannt.

Allgemein sind Shuttlelager Regallager für Stückgut, bei denen eine Vielzahl von Ladeeinheiten in einzelnen Kanälen entweder hintereinander angeordnet oder seitlich von den Kanälen gelagert werden können. Um nun ein Umlagern, Einlagern oder Auslagern von Stückgut zu ermöglichen, kommt ein Umsetzgerät in Form eines Verteilerfahrzeugs zum Einsatz, welches auch als Shuttle, Kanalfahrzeug oder Satellitenfahrzeug bezeichnet wird. Das Verteilerfahrzeug ist dazu ausgebildet, Ladungsträger zu unterfahren, anzuheben und innerhalb des Kanals im angehobenen Zustand zu bewegen. So können Einlagerungen und Auslagerungen durch Verfahren der Ladungsträger im Kanal vorgenommen werden. Im Falle dessen die Ladungsträger seitlich von den Kanälen gelagert werden, verfügt das Verteilerfahrzeug über entsprechende Mittel, um die Ladungsträger anzuheben, aus den seitlichen Lagerpositionen in den Kanal zu ziehen und dann innerhalb des Kanals im angehobenen Zustand zu bewegen.

Die DE 10 2014 114 496 A1 offenbart ein Shuttlelager nach dem Oberbegriff des Anspruchs 1, umfassend eine Laufschiene zur Führung einer Fahrbewegung eines Verteilerfahrzeugs in dem Regallager, wobei die Laufschiene durch zumindest zwei aneinander angrenzende und sich in der Schienenrichtung erstreckende Segmente gebildet wird, wobei im Bereich des Aneinandergrenzens der Segmente ein Schienenstoß gebildet wird, wobei die Segmente in der Schienenachtung gesehen links und rechts neben dem Schienenstoß je eine erste Aufnahme für jeweils ein sich senkrecht zur Schienenrichtung erstreckendes bolzenförmiges Befestigungsmittel aufweisen, wobei das Regallager ferner eine Befestigungsklammer aufweist, wobei die Befestigungsklammer zwei U-förmige Aussparungen aufweist zur jeweiligen Aufnahme der Befestigungsmittel, wobei die U-förmigen Aussparungen an den jeweils äußeren Schenkeln abgewinkelt ausgebildet sind.

Demgegenüber liegt der Erfindung die Aufgabe zugrunde, ein verbessertes Shuttlelager zu schaffen.

Die der Erfindung zugrunde liegende Aufgabe wird mit den Merkmalen des unabhängigen Schutzspruchs gelöst. Bevorzugte Ausführungsformen der Erfindung sind in den abhängigen Patentansprüchen angegeben.

Es wird ein Shuttlelager zur Lagerung von Ladungsträgern angegeben , wobei das Shuttlelager ein Gestell und einen Kanal aufweist, wobei das Gestell Laufschienen aufweist, wobei die Laufschienen zur Führung einer Fahrbewegung eines zum räumlichen Versetzen der Ladungsträger ausgebildeten Verteilerfahrzeugs im Kanal auf einer Lauffläche der Laufschienen ausgebildet sind, wobei die Laufschienen jeweils durch in Längsrichtung der Laufschienen hintereinander angeordnete Segmente gebildet werden, wobei die Segmente an dem Gestell durch Einpressgewindebolzen fixiert sind, wobei die Fixierung daraus resultiert, dass die Oberseite der Köpfe der Einpressgewindebolzen bündig mit der Lauffläche in den Segmenten aufgenommen sind und die Einpressgewindebolzen über die Gewinde mit dem Gestell verschraubt sind. D.h. die Laufschienen führen die Fahrbewegung des Verteilerfahrzeuges auf der Lauffläche.

Z.B. weist das Shuttlelager zumindest den Kanal mit zumindest einer ersten und einer zweiten Ebene auf, wobei die erste Ebene durch die Lauffläche definiert wird und die zweite Ebene der Lagerung von Ladungsträgern dient.

Unter "Ladungsträger" werden beispielsweise Paletten oder verschiedenste Arten von Vorrichtungen verstanden, welche in der Lage sind, gewünschtes zu lagerndes Stückgut aufzunehmen bzw. abzustützen.

Ausführungsformen der Erfindung könnten den Vorteil haben, dass eine Geräuschentwicklung beim Überfahren der Stellen, an welchen die Segmente an dem Gestell fixiert sind, minimiert wird. Die Erfindung hat überraschender Weise erkannt, dass eine Quelle der Geräuschentwicklung beim Betrieb eines Shuttlelagers daher rührt, dass die Räder des Verteilerfahrzeuges beim Überfahren der Befestigungsstellen schon bei kleinsten Unebenheiten an dieser Stelle Schlaggeräusche verursachen. Dadurch, dass nun die Oberseite der Köpfe der Einpressgewindebolzen bündig mit der Lauffläche in den Segmenten aufgenommen sind, gibt es keine Teile der der Laufschienen, welche sich außerhalb der Lauffläche befinden und somit - seien es Vertiefungen oder Erhebungen - Unebenheiten darstellen.

Aufgrund dessen keine Unebenheiten im Bereich der Lauffläche vorhanden sind, werden auch etwaige Erschütterungen des Verteilerfahrzeuges beim Überfahren der Befestigungsstellen minimiert oder gar vermieden. Dies könnte dann von Relevanz sein, wenn das Stückgut gegen Erschütterungen empfindlich reagieren könnte. Empfindliches Stückgut könnten hier bestimmte Chemikalien oder Elektronikbauteile sein.

Es sei angemerkt, dass gerade Einpressgewindebolzen deshalb von Vorteil sein könnten, da sich diese naturgemäß beim Einpressvorgang in die zugehörigen Löcher der Segmente so deformieren, dass automatisch die Oberseite der Köpfe der Einpressgewindebolzen bündig mit der Lauffläche in den Segmenten aufgenommen ist. Bei der alternativen Verwendung von z.B. Senkkopfschrauben ist diese Bündigkeit nicht gegeben, da diese Schrauben Fertigungstoleranzen aufweisen, sodass die Kopfoberseite z.B. je nach Toleranz einmal aus der Lauffläche der Segmente herausragt und ein anderes mal sich unterhalb der Lauffläche in den Segmenten selbst befindet.

Die Verwendung von Einpressgewindebolzen könnte ferner den Vorteil haben, dass die Löcher in den Segmenten, welche zur Aufnahme der Einpressgewindebolzen vorgesehen sind, mit größeren Toleranzen gefertigt werden können, ohne jedoch Nachteile im Hinblick auf die besagte Geräuschentwicklung in Kauf nehmen zu müssen. In allen Fällen werden die Einpressgewindebolzen in die vorgesehenen Löcher der Segmente so weit eingepresst, bis die Oberseite der Köpfe der Einpressgewindebolzen bündig mit der Lauffläche in den Segmenten aufgenommen ist. Hierzu kann z.B. das zum Einpressen verwendete Werkzeug einen Stempel aufweisen, wobei die Einpressgewindebolzen mit dem Stempel in die vorgesehenen Aussparungen der Segmente eingepresst werden. Überlappt dabei der Stempel in der Ebene der Lauffläche gesehen seitlich den Kopf des einzupressenden Bolzens, bildet das Segment beim Einpressvorgang automatisch einen Anschlag, der die Bewegung des Stempels in Richtung Lauffläche begrenzt. Damit ist gewährleistet, dass die Oberseite des Kopfes des Einpressgewindebolzens exakt bündig mit der Lauffläche in dem entsprechenden Segment aufgenommen ist.

Nach einer Ausführungsform der Erfindung sind die Köpfe der Einpressgewindebolzen vollständig in Profilsenken der Segmente aufgenommen. Z.B. weisen die Profilsenken eine kegelige Senkung auf und die Köpfe der Einpressgewindebolzen weisen eine zur kegeligen Senkung gegenstückige Kegelstumpfform auf. Die Verwendung von Profilsenken könnte den Vorteil haben, dass damit eine Selbstzentrierung der Bolzen gewährleistet ist. Ferner könnte der Einpressvorgang vereinfacht werden, da aufgrund der Trichterwirkung der Kegelform beim Einpressen des Bolzens das Material senkrecht zur Einpressrichtung, also bezüglich des zylindersymmetrischen Einpressgewindebolzens radial nach innen gedrängt wird. Damit wird es dem Material des Bolzens vereinfacht, die gewünschte Form im Kopfbereich mit minimalem Kraftaufwand einzunehmen.

Nach einer Ausführungsform der Erfindung weisen die Profilsenken eine Langlochform auf, wobei sich die Längsachse des Langlochs in die Laufrichtung der Laufschienen erstreckt, wobei die Profilsenken in einer Ebene senkrecht zur Laufrichtung gesehen schräg verlaufende Wandungen aufweisen und die Köpfe der Einpressgewindebolzen in dieser Ebene gesehen vollständig an den Wandungen anliegen.

Dies könnte den Vorteil haben, dass der Einpressvorgang des Bolzens in das Segment weiter mechanisch vereinfacht wird, da aufgrund der Langlochform in der Laufrichtung gesehenen immer ausreichend Platz für jenen Teil des Material des Kopfes besteht, welcher beim Einpressen innerhalb des Segments deformiert und in bzw. entgegen der Laufrichtung deformiert wird. Darüber hinausgehend findet aufgrund der schräg verlaufenden Wandungen eine Selbstzentrierung des Einpressgewindebolzens in der Richtung senkrecht zur Laufrichtung gesehen und senkrecht zur Achse des zylindrischen Einpressgewindebolzens statt.

Nach einer Ausführungsform der Erfindung sind die Einpressgewindebolzen kraftschlüssig durch in die Gewinde eingreifende Muttern mit dem Gestell verschraubt. Damit ist es zum Beispiel möglich, nachträglich die Segmente vom Gestell zu lösen und insbesondere einzelne Segmente auszutauschen. Dies könne beispielsweise notwendig werden, wenn eines der Segmente beschädigt ist.

Nach einer Ausführungsform der Erfindung sind die Oberflächen der Köpfe in der Ebene parallel zur Lauffläche gesehen konturlos. Durch die glatten Oberflächen der Köpfe bilden die Köpfe selbst einen Teil der Lauffläche ohne einen Widerstand, welcher beispielsweise aus einer abschnittsweisen Vertiefung der Oberflächen resultieren könnte. Beim Überfahren der Köpfe durch das Verteilerfahrzeug gibt es für die hierzu verwendeten Räder des Verteilerfahrzeuges keinerlei Unterschied, was den Kontakt zwischen der normalen Lauffläche und den Kontakt mit der Oberfläche der Köpfe betrifft. Da also für die Räder "gefühlt" die Oberfläche der Köpfe und der Lauffläche identisch ist, wird eine Geräuschentwicklung beim Überfahren der Köpfe vermieden.

Nach einer Ausführungsform der Erfindung grenzen in der Ebene der Lauffläche gesehen die Lauffläche der Segmente lückenlos an die Oberflächen der Köpfe an. Durch den mangels einer Lücke zwischen Lauffläche und Köpfe der Bolzen "nahtlosen" Übergang zwischen Bolzen und Lauffläche könnte auch hier eine weitere Quelle der Geräuschentwicklung beim Überfahren der Köpfe durch das Verteilerfahrzeug wegfallen. Bezüglich der Oberflächenkontur bilden die Lauffläche und die Oberfläche der Köpfe eine einzige ununterbrochene Ebene, auf welcher das Verteilerfahrzeug fahren kann.

Im Folgenden werden bevorzugte Ausführungsformen der Erfindung anhand der Zeichnungen näher erläutert. Es zeigen:
- Figur 1: eine schematische perspektivische Darstellung eines Shuttlelagers,
- Figur 2: eine schematische Querschnittansicht eines Kanals eines Shuttlelagers,
- Figur 3: eine perspektivische Ansicht zweier Segmente,
- Figur 4: eine perspektivische Ansicht zweier Segmente,
- Figur 5: eine Schnittansicht durch ein Segment,
- Figur 6: Schritte eines Verfahrens zum Einpressen eines Einpressgewindebolzens,
- Figur 7: eine Schnittansicht durch ein Segment.

Im Folgenden werden einander ähnliche Elemente mit den gleichen Bezugszeichen gekennzeichnet.

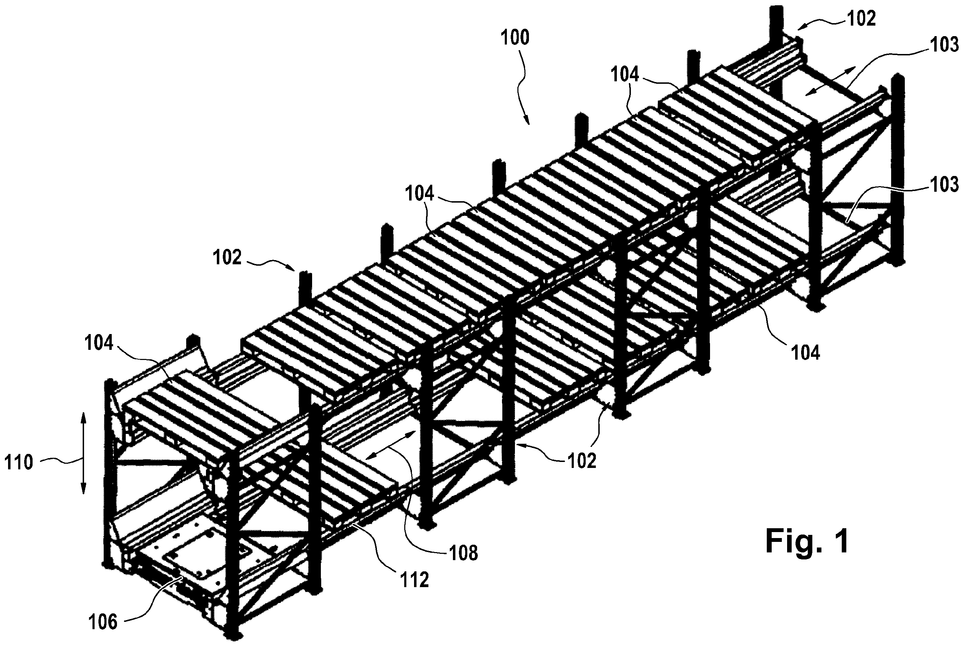

Die Figur 1 zeigt ein Kanallager als Spezialfall eines Shuttlelagers 100 mit einem einzelnen Kanal mit einer in Figur 1 nicht näher ersichtlichen ersten und zweiten Ebene, wobei die erste Ebene eine Lauffläche für ein Verteilerfahrzeug 106 und die zweite Ebene zur Aufnahme von Ladungsträgern 104 dient. Ersichtlich sind jedoch die erste Ebene bildende Laufschienen 112 zur Führung einer Fahrbewegung eines Verteilerfahrzeugs 106 in Richtung 108, also längs der Erstreckungsrichtung der Laufschienen 112.

In dem in Figur 1 gezeigten Kanal befinden sich eine Vielzahl der Ladungsträger 104, im vorliegenden Fall Paletten. Das Verteilerfahrzeug 106 kann nun durch eine entsprechende Bewegung in Richtung 108 längs der Laufschienen 112 unterhalb einer Palette 104 bewegt werden, woraufhin die Palette 104 durch das Verteilerfahrzeug angehoben werden kann in Richtung 110, um daraufhin innerhalb des Kanals in Richtung 108 durch eine Bewegung des Verteilerfahrzeugs in Richtung 108 verfahren zu werden. Damit ist ein Einlagern und Auslagern der Paletten 104 mit deren in Figur 1 nicht ersichtlichem Stückgut möglich.

Ferner in Figur 1 ersichtlich, sind Rahmenverstrebungen 102, durch welche in Verbindung mit den Laufschienen 112 ein stabiler Gesamtverbund des Kanallagers 100 gebildet wird. Die Rahmenverstrebungen 102 sind in quer zur Laufrichtung 108 verlaufende Traversen 103 miteinander verbunden. Die Laufschienen 112 sind z.B. an den Traversen 103 über Einpressgewindebolzen fixiert. Alternativ können Winkelprofile "Konsolen" zum Einsatz kommen, über welche die Laufschienen 112 über Einpressbolzen an den Rahmenverstrebungen fixiert sind. Insgesamt bilden die Traversen und die Rahmenverstrebungen das sogenannte "Gestell" des Kanallagers.

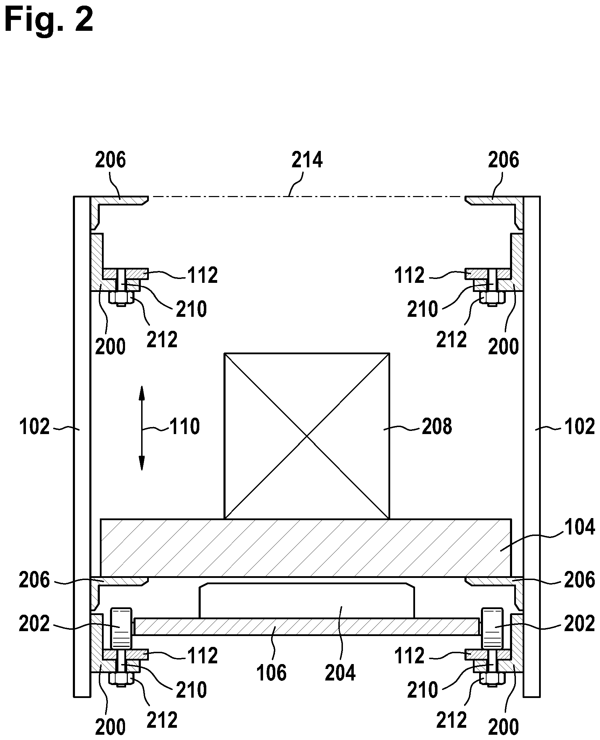

Die Figur 2 zeigt nun eine Querschnittansicht des Kanallagers 100. Deutlich ersichtlich sind wiederum Teile der senkrecht angeordneten Rahmenverstrebungen 102, an welchen Konsolen 200 fixiert sind. Diese Konsolen 200 dienen der Aufnahme und Fixierung der Laufschienen 112. Die Laufschienen 112 definieren dabei die Lauffläche für die Räder 202 des Verteilerfahrzeugs 106.

Ferner sind in der Figur 2 Konsolen 206 gezeigt, welche eine auf Lagefläche für die Paletten 104 bilden. Durch die Auflagefläche wird damit die zweite Ebene 214 gebildet.

Zur Bewegung einer Palette 104 wird das Verteilerfahrzeug 106 unter die Palette 104 verfahren, um daraufhin durch einen Mechanismus 204 des Verteilerfahrzeugs in Richtung 110 angehoben zu werden, wodurch ein Anheben der Palette 104 von der Laufschiene 112 erfolgt. Die Palette 104 kann zusammen mit dem Verteilerfahrzeug 106 entlang der Laufschienen 112 verfahren werden, um die Palette 104 daraufhin an einer gewünschten Position wieder abzustellen.

Die Laufschienen 112 werden durch in Längsrichtung der Laufschienen hintereinander angeordnete Segmente gebildet. Diese Segmente sind dabei über die Konsolen 200 an dem Gestell des Kanallagers über Einpressgewindebolzen 210 fixiert. Die Einpressgewindebolzen 210 sind über ihr Gewinde mit dem Gestell durch eine entsprechende Mutter 212 verschraubt.

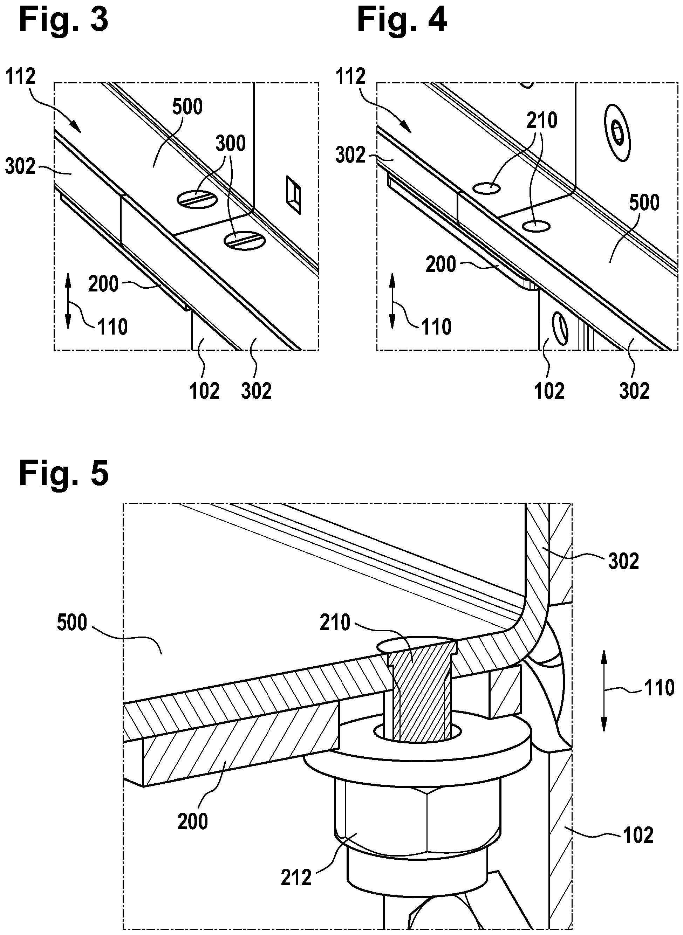

Die Figuren 3 und 4 zeigen perspektivische Ansichten zweier unmittelbar aneinander angrenzender Segmente 302, welche zusammen jeweils einen Teil der Laufschiene 112 bilden. Die Segmente 302 liegen auf jeweils einer Konsole 200 auf und sind mit der jeweiligen Konsole über Befestigungsmittel fixiert. In Figur 3 ist dabei die Fixierung über eine Schlitzschraube 300 realisiert, wohingegen in der Figur 4 die Fixierung über Einpressgewindebolzen 210 realisiert ist.

Fährt nun in der Figur 3 ein Verteilerfahrzeug mit seinen Rädern 202 über die Köpfe der Schlitzschrauben 300, so kann dieses überfahren der Schlitzschrauben 300 zu einer Geräuschentwicklung führen, da zum einen die Schlitze der Schrauben eine Unebenheit für die darüber rollenden Räder 202 bilden und zum anderen aufgrund von Fertigungstoleranzen die Köpfe der Schrauben 300 nie vollständig mit der Lauffläche der Laufschienen 112 bündig sind. "Bündig" bedeutet hier, dass in der Richtung 110 gesehen die durch die Oberfläche der Köpfe der Schrauben 300 gebilden Ebene mit der durch die Lauffläche der Laufschienenl 12 gebildeten Ebene identisch ist.

In der Variante der Figur 4 hingegen ist aufgrund der Verwendung der Einpressgewindebolzen 210 gewährleistet, dass die Oberseite der Köpfe der Einpressgewindebolzen bündig mit der Lauffläche ist, d.h. die Köpfe weder in den Laufweg der Räder 202 hineinragen noch bezüglich der Lauffläche eine Vertiefung bilden. Da außerdem die Köpfe der Einpressgewindebolzen konturlos sind, d.h. keinerlei Vertiefungen oder Erhebungen aufweisen, ist es für die Räder 202 des Verteilerfahrzeugs 106 möglich, über die durch die Einpressgewindebolzen 210 gebildeten Fixierungspunkte ohne Widerstand hinweg zu rollen. Eine Geräuschentwicklung aufgrund des Vorhandenseins dieser Fixierungspunkte, welche überrollt werden, wird vermieden.

Die Figur 5 zeigt eine Schnittansicht, welche im Querschnitt ein Segment 302 mit seiner dadurch gebildeten Lauffläche 500 zeigt. Das Segment 302 ist über die Konsole 200 an einer Regalstrebe 102 fixiert. Die Befestigung des Segments 302 Konsole 200 erfolgt über einen Einpressgewindebolzen 210, wobei dieser über die Mutter 212 mit der Konsole 200 verschraubt ist.

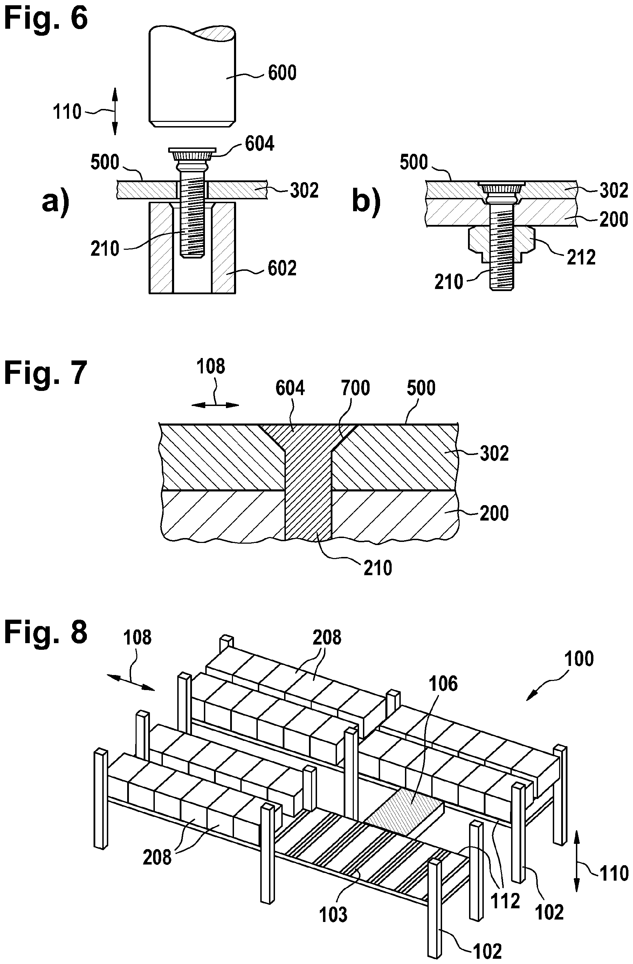

Die Figur 6 zeigt verschiedene Schritte eines Verfahrens, um ein Segment 302 mit einer Konsole 200 zu verbinden. Dabei ist in der Figur 6a der Einfachheit halber lediglich das Segment 302 gezeigt und die Konsole 200 ist zeichnerisch weggelassen. Um nun den Einpressgewindebolzen 210 in das Segment 302 einzubringen, wird ein Stempel 600 von oben auf den Kopf 604 des Einpressgewindebolzen aufgepresst. Die Pressfläche des Stempels 600 ist dabei größer als die Fläche des Kopfes 604. Eine Lager 602, welches optional zum Einsatz kommen kann, dient dazu, die beim ein Pressvorgang wirkenden Kräfte aufzunehmen, um damit einem sich beispielsweise Verbiegen des Segments 302 in der Richtung 110 vorzubeugen. Dadurch, dass die Pressfläche des Stempels 600 größer ist als die Fläche des Kopfes 604 ist der maximale Bewegungsweg des Stempels 600 in Richtung 110 durch die Lauffläche 500 begrenzt, welche durch die Segmente 302 gebildet wird. Damit ist automatisch gewährleistet, dass die Oberfläche des Kopfes 604 Plan ist mit der Lauffläche 500. Nachdem in Figur 6a gezeigten Stempelvorgang kann das Lager 602 entfernt werden. Wie in der Figur 6b gezeigt kann daraufhin das Segment 302 an der Konsole 200 fixiert werden, indem der Einpressgewindebolzen 210 mit einer Mutter 212 gekontert wird.

Die Figur 7 zeigt eine weitere Querschnittsansicht eines Segments 302 mit darin aufgenommenem Einpressgewindebolzen 210. Hier ist ersichtlich, dass der Kopf 604 des Einpressgewindebolzens 210 vollständig in einer Kegelförmigen Profilsenke 700 des Segments 302 aufgenommen ist. Entsprechend weist der Kopf 604 eine zur kegeligen Senkung gegenstückige Kegelstumpfform auf. Dementsprechend schmiegt sich beim ein Pressvorgang der Kopf 604 vollständig an die Wände der Profilsenke 700 des Segments 302 an und in Laufrichtung 108 gesehen entsteht am Übergang zwischen dem Segment 500 und dem Kopf 604 keine Lücke.

Die Figur 8 zeigt ein Shuttlelager 100, bei dem im Gegensatz zum Shuttlelager 100 der Figur 1 die Ladungsträger 208 nicht hintereinander angeordnet im Kanal (d.h. in Richtung 108) gelagert werden, sondern links und rechts seitlich des Kanals (senkrecht dazu). Das Verteilerfahrzeug 106 kann auf den Laufschienen 112 verfahren werden und ist dazu in der Lage, links und rechts Ladungsträger 208 von den Traversen 103 abzuheben, auf das Verteilerfahrzeug zu bewegen und dann auf dem Verteilerfahrzeug befindlich in Richtung 108 zu transportieren. Bezüglich der Ausgestaltung der Laufschienen, insbesondere im Hinblick auf die Fixierung deren Segmente, gilt analog das bezüglich der Figuren 1-7 gesagte.

### Bezugszeichenliste

- 100: Shuttlelager
- 102: Rahmenverstrebung
- 103: Traverse
- 104: Palette
- 106: Verteilerfahrzeug
- 108: Richtung
- 110: Richtung
- 112: Laufschiene
- 200: Konsole
- 202: Rad
- 204: Hebemechanismus
- 206: Konsole
- 208: Stückgut
- 210: Einpressgewindebolzen
- 214: zweite Ebene
- 300: Schraube
- 302: Segment
- 500: Lauffläche
- 600: Stempel
- 602: Lager
- 604: Kopf
- 700: Profilsenke

## Patentansprüche

1. Shuttlelager (100) zur Lagerung von Ladungsträgern (104), wobei das Shuttlelager (100) ein zum räumlichen Versetzen der Ladungsträger (104) ausgebildetes Verteilerfahrzeug (106), ein Gestell (102) und einen Kanal aufweist, wobei das Gestell (102) Laufschienen (112) aufweist, wobei die Laufschienen (112) zur Führung einer Fahrbewegung des Verteilerfahrzeugs (106) im Kanal auf einer Lauffläche (500) der Laufschienen (112) ausgebildet sind, wobei die Laufschienen (112) jeweils durch in Längsrichtung der Laufschienen (112) hintereinander angeordnete Segmente (302) gebildet werden, **dadurch gekennzeichnet, dass** die Segmente (302) an dem Gestell (102) durch Einpressgewindebolzen (210) fixiert sind, wobei die Fixierung daraus resultiert, dass die Oberseite der Köpfe (604) der Einpressgewindebolzen (210) bündig mit der Lauffläche (500) in den Segmenten (302) aufgenommen sind und die Einpressgewindebolzen (210) über die Gewinde mit dem Gestell (102) verschraubt sind.

2. Shuttlelager (100) nach Anspruch 1, wobei die Köpfe (604) der Einpressgewindebolzen (210) vollständig in Profilsenken (700) der Segmente (302) aufgenommen sind.

3. Shuttlelager (100) nach Anspruch 2, wobei die Profilsenken (700) eine kegelige Senkung aufweisen und die Köpfe (604) der Einpressgewindebolzen (210) eine zur kegeligen Senkung gegenstückige Kegelstumpfform aufweisen.

4. Shuttlelager (100) nach Anspruch 2, wobei die Profilsenken eine Langlochform aufweisen, wobei sich die Längsachse des Langlochs in die Laufrichtung der Laufschienen (112) erstreckt, wobei die Profilsenken in einer Ebene senkrecht zur Laufrichtung gesehen schräg verlaufende Wandungen aufweisen und die Köpfe (604) der Einpressgewindebolzen (210) in der Ebene gesehen vollständig an den Wandungen anliegen.

5. Shuttlelager (100) nach einem der vorigen Ansprüche, wobei die Einpressgewindebolzen (210) kraftschlüssig durch in die Gewinde eingreifende Muttern mit dem Gestell (102) verschraubt sind.

6. Shuttlelager (100) nach einem der vorigen Ansprüche, wobei die Oberflächen der Köpfe (604) in der Ebene parallel zur Lauffläche (500) gesehen konturlos sind.

7. Shuttlelager (100) nach einem der vorigen Ansprüche, wobei in der Ebene der Lauffläche (500) gesehen die Lauffläche (500) der Segmente (302) lückenlos an die Oberflächen der Köpfe (604) angrenzen.

## Claims

1. Shuttle warehouse system (100) for storing load carriers (104), wherein the shuttle warehouse system (100) has a distribution vehicle (106) designed to move the load carriers (104) in space, a framework (102), and an aisle, the framework (102) having guide rails (112), the guide rails (112) being designed to guide the movement of the distribution vehicle (106) within the aisle over a bearing surface (500) of the guide rails (112), the guide rails (112) each being formed by segments (302) arranged in succession in the longitudinal direction of the guide rails (112), **characterised in that** the segments (302) are fixed to the framework (102) by press-fit threaded bolts (210), the fixing resulting from the upper side of the heads (604) of the press-fit threaded bolts (210) being received in the segments (302) flush with the bearing surface (500) and from the press-fit threaded bolts (210) being screwed via the thread to the framework (102).

2. Shuttle warehouse system (100) according to claim 1, wherein the heads (604) of the press-fit threaded bolts (210) are received completely in countersinks (700) of the segments (302).

3. Shuttle warehouse system (100) according to claim 2, wherein the countersinks (700) have a conical depression and the heads (604) of the press-fit threaded bolts (210) have a frustoconical shape, which mates with the conical depression.

4. Shuttle warehouse system (100) according to claim 2, wherein the countersinks have a slot shape, wherein the longitudinal axis of the slot extends in the running direction of the guide rails (112), wherein the countersinks, as considered in a plane perpendicular to the running direction, have walls running at an incline, and the heads (604) of the press-fit threaded bolts (210) bear fully against the walls as considered in the plane.

5. Shuttle warehouse system (100) according to one of the preceding claims, wherein the press-fit threaded bolts (210) are screwed to the framework (102) in a frictionally engaged manner by nuts engaging in the thread.

6. Shuttle warehouse system (100) according to one of the preceding claims, wherein the surfaces of the heads (604) are contour-less as considered in the plane parallel to the bearing surface (500).

7. Shuttle warehouse system (100) according to one of the preceding claims, wherein the bearing surfaces (500) of the segments (302) are arranged adjacently to the surfaces of the heads (604), without gaps, as considered in the plane of the bearing surfaces (500).

## Revendications

1. Magasin de navette (100) permettant le stockage de supports de chargement (104), où le magasin de navette (100) présente un véhicule de distribution (106) formé pour le déplacement dans l'espace des supports de chargement (104), un bâti (102) et un canal, où le bâti (102) présente des glissières (112), où les glissières (112) sont conçues pour le guidage d'un déplacement par roulage du véhicule de distribution (106) dans le canal sur une surface de roulage (500) des glissières (112), où les glissières (112) sont formées respectivement par des segments (302) disposés les uns derrière les autres dans le sens longitudinal des glissières (112),
**caractérisé en ce que**
les segments (302) sont fixés sur le bâti (102) par des écrous filetés à sertir (210), où la fixation résulte du fait que la face supérieure des têtes (604) des écrous filetés à sertir (210) est logée dans les segments (302) affleurant avec la surface de roulage (500), et les écrous filetés à sertir (210) sont vissés avec le bâti (102) par le biais des filetages.

2. Magasin de navette (100) selon la revendication 1, dans lequel les têtes (604) des écrous filetés à sertir (210) sont totalement logées dans des fraisures de profil (700) des segments (302).

3. Magasin de navette (100) selon la revendication 2, dans lequel les fraisures de profil (700) présentent une fraisure en cône et les têtes (604) des écrous filetés à sertir (210) présentent une forme tronconique correspondant à la fraisure en cône.

4. Magasin de navette (100) selon la revendication 2, dans lequel les fraisures de profil présentent une forme de trou oblong, où l'axe longitudinal du trou oblong s'étend dans le sens de roulage des glissières (112), où les fraisures de profil, vu dans un plan perpendiculaire au sens de roulage, présentent des parois s'étendant de manière inclinée et les têtes (604) des écrous filetés à sertir (210) sont totalement plaquées aux parois, vu dans le plan.

5. Magasin de navette (100) selon l'une des revendications précédentes, dans lequel les écrous filetés à sertir (210) sont vissés avec le bâti (102) par la force par les écrous en prise dans les filetages.

6. Magasin de navette (100) selon l'une des revendications précédentes, dans lequel les surfaces des têtes (604) sont sans contour, vu dans le plan parallèle à la surface de roulage (500).

7. Magasin de navette (100) selon l'une des revendications précédentes, dans lequel la surface de roulage (500) des segments (300) est adjacente sans lacune aux surfaces des têtes (604), vu dans le plan de la surface de roulage (500).
